(19) Europäisches Patentamt
European Patent Office
Office européen des brevets

(11) Publication number: **0 513 373 A1**

(12) # EUROPEAN PATENT APPLICATION published in accordance with Art. 158(3) EPC

(21) Application number: **91920638.3**

(22) Date of filing: **29.11.91**

(86) International application number: **PCT/JP91/01642**

(87) International publication number: **WO 92/09643 (11.06.92 92/13)**

(51) Int. Cl.5: **C08F 246/00**, C08F 220/58, C08F 212/08, C08F 220/10, C08F 220/42, C08F 216/12

(30) Priority: **30.11.90 JP 339940/90**

(43) Date of publication of application: **19.11.92 Bulletin 92/47**

(84) Designated Contracting States: **BE DE FR GB IT**

(71) Applicant: **KANEGAFUCHI KAGAKU KOGYO KABUSHIKI KAISHA**
**2-4 Nakanoshima 3-chome**
**Kita-ku Osaka-shi Osaka-fu 530(JP)**

(72) Inventor: **TAMAI, Kazuhiko 6-530, Maikokdai 6-chome**
**Tarumi-ku**
**Kobe-shi Hyogo-ken 655(JP)**
Inventor: **YONEZAWA, Kazuya 12-11, Tsutsujigaoka 5-chome**
**Tarumi-ku**
**Kobe-shi Hyogo-ken 655(JP)**

(74) Representative: **Vossius & Partner**
**Siebertstrasse 4 P.O. Box 86 07 67**
**W-8000 München 86(DE)**

(54) **VINYLIC POLYMER AND PRODUCTION THEREOF.**

(57) A vinylic polymer containing one structural unit having a glycidyl group represented by general formula (I) per 2 to 1,000 repeating vinylic units, wherein Ar represents a $C_6$ to $C_{23}$ aromatic hydrocarbon group having at least one glycidyloxy group and R represents hydrogen or methyl. The polymer is excellent not only in thermal resistance and mechanical properties but also in bondability, coatability, dyeability and antistatic properties.

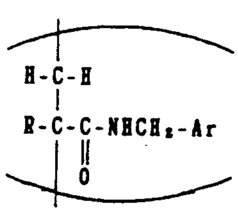

( I )

EP 0 513 373 A1

## TECHNICAL FIELD OF THE INVENTION

The present invention relates to a novel polyvinyl type polymers and a manufacturing method thereof. More particularly it relates to a polyvinyl type polymers having glycidyl groups and improved in mechanical properties such as heat resistance, dyeability, paintability et cetera, and a manufacturing method thereof.

## BACKGROUND OF THE INVENTION

For improving the mechanical strength, heat resistance et cetera of a polyvinyl polymer, there is known a method of copolymerizing it with one or more than two kinds of vinyl monomers. However, a polyvinyl type polymer manufactured by such a method is not necessarily improved in properties and there has been a need for further improvement.

For instance, in the Laid-open Patent Publication No. 29627/'79, there is disclosed that, when polymers of glycidyl methacrylate with any one of methyl methacrylate, tertiary butyl methacrylate and ethyl acrylate is used as a photoresist layer, the practical sensitivity when a pattern is prepared is improved to 10-20 fold that of polymethyl methacrylate, and preferred in adhesiveness to a substrate and resolution property and heat deformation temperature.

There is, however, a problem that glycidyl methacrylate-modified polymethacrylate or glycidyl methacrylate-modified polystyrene is apt to be decomposed under high temperature conditions, with its heat resistance being insufficient. That is, when it is kneaded with other resins, marked is decomposition of glycidyl methacrylate-modified polymethacrylate et cetera under high temperature conditions and it cannot play sufficiently the function of compatibility promotor.

The present invention is aimed at providing a polyvinyl type polymer for solving the aforementioned problem by copolymerizing a specific compound having glycidyl groups.

## DISCLOSURE OF THE INVENTION

The present invention, in a first aspect, is aimed at providing a modified polyvinyl type polymer having one structural unit of glycidyl group represented by the following general formula (I) per 2-1,000 repeating units of vinyl:

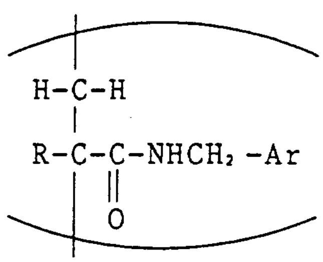

(I)

(In the formula, Ar represents an aromatic hydrocarbon group 6-23 in carbon number having at least one glycidyloxy group, and R represents hydrogen atom or methyl group.)

The present invention is, in a second aspect, to provide a method for manufacturing the aforementioned modified polyvinyl type polymer which comprises copolymerizing (A) a vinyl monomer and (B) a compound having glycidyl group represented by the following general formula (III) in the presence of (C) a radical polymeriztion initiator:

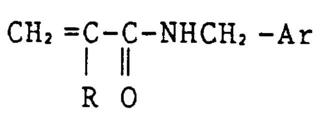

(III)

[In the formula, Ar and R are the same as in the general formula (I)].

## BEST MODE FOR PRACTICING THE INVENTION

Hereinafter the present invention will be explained in greater detail.

An important constituent element of the present invention is a structural unit having a glycidyl group represented by the following general formula (I):

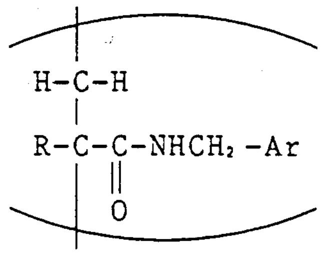

(I)

[In the formula, Ar represents an aromatic hydrocarbon group 6-23 in carbon number having at least one glycidyloxy group and R represents hydrogen atom or methyl group.] and it derives from a compound having at least one acryl amide group and a glycidyl group, respectively.

Such compounds can be manufactured by a method described in the Laid-open Patent Publication No.130580/'85.

For example, when 2,6-xylenol and N-methylol acrylamide are used as starting materials, a compound represented by the following structural formula (IV) will be obtained:

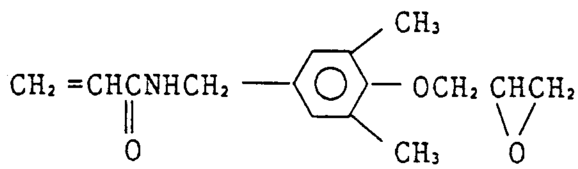

(IV)

The modified polyvinyl type polymers of the present invention contain one structural unit having glycidyl group of the aforementioned general formula (I) per 2-1,000, preferably 2-200 repeating units of vinyl. The amide bond in the structural unit of the general formula (1) improves dyeability and paintability, while the glycidyl group contributes to an improvement of not only mechanical strength and heat resistance but also of affinity when it is blended with other resin components. If the proportion of the structural units having glycidyl group represented by the general formula (I) is less than the aforementioned proportion, no sufficient properties-improving effect is obtainable, while if this proportion is too high, it is not preferable, either, for beneficial innate propeties of polyvinyl resin are lost; deterioration of the thermoplasticity being resulted.

In the modified polyvinyl type polymers of the present invention, the structural unit represented by the general formula (I) may possibly exist at random or regularly blockwise, or may as well exist at the end of the molecule or as graft. There is no particular limitation for the molecular weight of the polyvinyl type polymers, but preferably it may be in a range of 3,000-1,000,000 and more preferably 5,000-300,000.

There is no particular limitation about the method for manufacturing the modified polyvinyl type polymers but the following method may be particularly suitable.

That is, a method is proposed, in which a vinyl monomer (A) and a compound (B) having a glycidyl group represented by the general formula (III)

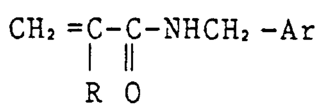

(III)

[In the formula, Ar and R are the same as in the general formula (I)]. are subjected to copolymerization by the use of a radical polymerization initiator (C) in a solution or water in the presence of a dispersing agent.

As the vinyl monomers used in the present invention, there may be included styrene, methyl methacrylate, butyl acrylate, α -hydroxy acrylate, trimethylolpropane triacrylate, ethylene glycol dimethacrylate, acrylonitrile, or vinyl ethers such as methyl vinyl ether, ethyl vinyl ether, isopropyl vinyl ether, n-propyl vinyl ether, isobutyl vinyl ether, n-amyl vinyl ether, isoamyl vinyl ether and 2-ethyl hexyl

vinyl ether. These may be used singly or in combination of two or more.

Moreover, vinyl type polymers of the present invention may also be synthesized by the conjoint use of the foregoing vinyl monomers and olefin monomers including ethylene, propylene, butene or dienes. These vinyl monomers and these olefin monomers may be used singly or in combination of two or more, respectively.

The compound (B) represented by the general formula (III) may be obtainable by condensing an aromatic hydrocarbon having at least one phenolic hydroxyl group with N-methylol acrylamide or N-methylol methacrylamide or alkyl ether derivatives of N-methylol acrylamide or N-methylol methacrylamide (hereinafter referred to as N-methylol acrylamides) in the presence of an acidic catalyst and then by glycidylization of the phenolic hydroxyl group.

When, for example, 2,6-xylenol and N-methylol acryl amides are used as starting materials, a compound represented by the following structural formula (V) will be obtained:

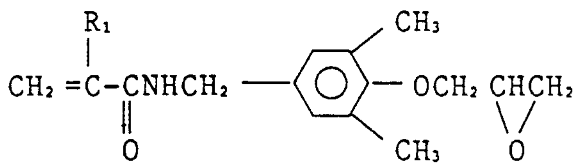
( V)

[In the formula, $R_1$ represents hydrogen atom or methyl group. ]

When ortho-cresol and N-methlol acryl amides are used as starting materials, the resultant compound will be of the following structural formula (VI):

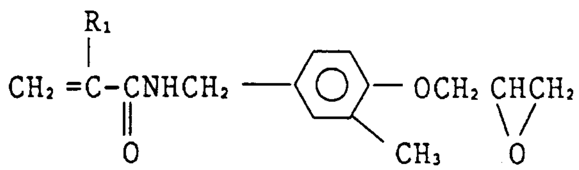
( VI)

[In the formula, $R_1$ represents hydrogen atom or methyl group. ]

As the radical polymerisation initiator (C) used in the present invention, any known radical polymerization initator may be used.

For example, peroxides such as cumene hydroperoxide, tertiary butylhydroperoxide, benzoyl peroxide, lauroyl peroxide, decanoyl peroxide and acetyl peroxide, or azo compounds such as azobisisobutyronitrile may be used alone or in combination of two or more.

The present invention will be described more specifically with reference to examples, but it is to be noted that the invention is by no means limited thereto.

Unless otherwise indicated, "part" and "%" in the following description mean "weight part" and "weight %", respectively.

Reference Example

A mixture of 102.6 parts of 4-acryl amide methyl-2, 6-dimethyl phenol, 181 parts of epichlorohydrine and 2.27 parts of benzyltriethyl ammonium chloride were stirred for 30 minutes at 100 °C. This reaction mixture was cooled to 50 °C, 147 parts of 5N sodium hydroxide was dripped thereto in 10 minutes under stirring, this followed by stirring for 1 hour at 45-50°C.

The resulting reaction mixture was cooled down to the room temperature, this followed by separation after addition of 120 parts of methylisobutylketone and 500 parts of water. The separated organic layer was rinsed 3 times with 300 parts of water and after dehydration with sodium sulfate anhydride, the solvent was distilled off under reduced pressure and thus N- {4-(2, 3-epoxypropoxy)-3, 5-dimethylphenylmethyl} acryl amide was obtained. The epoxy equivalent weight measured by the method of JIS K 7236 was 271 and the melting point was 90-92 °C.

Example 1

98.80 g (0.95 mol) of styrene monomer, 13.05 g (0.05mol) of N- {4-(2,3-epoxypropoxy)-3,5-dimethylphenyl} acrylamide and 0.67 g (2.8 x 10 $^{-3}$mol) of benzoyl peroxide are put together into deionized water with 2.0 g of polyvinyl alcohol, 89 % in saponification value, dissolved therein and stirring was continued for 4 hours at 85 °C. After allowing the liquid mixture to cool, it was filtrated and a product in a bead form was obtained. The product was dissolved in 200 mℓ of methylene chloride, the solution was gradually dripped into 2,000 mℓ of methanol and the resulting white powder was dried at 60 °C under reduced pressure. The weight of the powder after drying was 94.36 g.

The numeral mean molecular weight calculated from GPC of the so obtained polyvinyl type polymer, the epoxy equivalent measured by the method of JIS K 7236 and the 5% weight loss temperature measured by thermogravimetric analysis are shown in Table 1.

This modified polyvinyl type polymer was found to have one structural unit derived from the structural formula (IV) per 19.8 repeating units of vinyl.

The numeral mean molecular weight and 5% weight loss temperature were measured in the following ways. Numeral mean molecular weight:

The numeral mean molecular weight of polyvinyl type polymer was measured by the use of Hitachi's liquid chromatograph (Model 655A-12) with Showa Denko's column (Column No. 901154) connected thereto with chloroform as a solvent. The numeral mean molecular weight is a vaLue for polystyrene determined against the molecular calibration curve prepared by the use of standard polystyrene. 5% weight loss temperature:

Measurement was taken of 10mg of polyvinyl polymer by the use of Rigaku Denki's program temperature controller (Model: PTC-10A) at a temperature being raised form 20 °C to 500 °C at a heating ratio of 10 °C /min. The 5% weight loss temperature is a temperature at which, when the temperature is raised at the aforementioned rate, the weight of polyvinyl polymer comes to 95% of the weight before heating.

Example 2

83.2 g (0.80 mol) of styrene monomer, 52.2 g (0.20 mol) of N- {4-(2,3-epoxypropoxy)-3,5-dimethylphenylmethyl} acrylamide synthesized in Reference Example and 0.67 g (2.8 x 10 $^{-3}$mol) of benzoyl peroxide were put together into deionized water with 2.0 g of polyvinvl alcohol, 89% in saponification value, dissolved therein and stirring was continued for 4 hours at 85 °C. After allowing to cool off and subsequent filtration, a reaction product in a bead form was obtained. This reaction product was dissolved in 200mℓ of methylene chloride, the solution was gradually dripped into 2,000 mℓ of methanol and after filtration the obtained white powder was dried at 60 °C under reduced pressure. The weight of the powder after drying was 110.32 g.

The numeral mean molecular weight calculated from GPC of the polyvinyl copolymer thus obtained, the epoxy equivalent determined by the method of JIS K 7236 and the 5% weight loss temperature determined by the thermogravimetric analysis are shown in Table 1.

This modified polyvinyl type polymer had one structural unit derived from the structural formula (IV) per 4.4 repeating units of vinyl.

Example 3

75.00 g (0.75 mol) of methyl methacrylate, 65.25 g (0.25 mol) of N- {4-(2,3-epoxypropoxy)-3,5-d imethylphenylmethyl } acrylamide synthesized in Reference Example and 8.20 g (0.05 mol) of azoisobutyronitrile were dissolved in 600mℓ of methyl ethyl ketone, the resulting monomer solution was dripped into 100mℓ of methyl ethyl ketone in $N_2$ atmosphere in 4 hours under reflux and stirring, and thereafter stirring was continued for 2 hours under reflux, then methyl ethyl ketone solution (100 mℓ) of 3.30 g (0.02 mol) of azoisobutyronitrile was added, followed by stirring for 2 hours under reflux. After allowing to cool off and subsequent filtration, the filtrate was distilled off under reduced pressure, the resulting reaction mixture was dissolved in 500 mℓ of acetone and after gradual dripping of the solution into 500 mℓ of methanol, the methanol layer was removed by decantation and the remainder was washed several times with 500 mℓ of methanol. The resulting polymer was recovered by dissolving with acetone, acetone was then eliminated by distillation and 92.40 g of white powder was obtained. The numeral mean molecular weight, the epoxy equivalent determined by the method of JIS K 7236 and the 5% weight loss temperature determined by the thermogravimetric analysis are shown in Table 1.

This modified polyvinyl type polymer had one structural unit derived from the structural formula ( IV) per 4.5 repeating units of vinyl.

Comparative example 1

104.00 g (1.00 mol) of styrene monomer and 0.67 g (2.8 x $10^{-3}$mol) of benzyl peroxide were put together into deionized water with 2.0 g of polyvinyl alcohol, 89% in saponification degree, dissolved therein and stirring was continued for 4 hours at 85 °C. After allowing to cool off and subsequent stirring, a reaction product in a bead form was obtained. This reaction product was dissolved in 200mℓ of methylene chloride, the solution was gradually dripped into 2,000 mℓ of methanol and after filtration the white powder obtained was dried under reduced pressure. The weight of the powder after drying was 89.35 g.

The numeral mean molecular weight thus calculated from GPC and the 5% weight loss temperature determined by thermogravimetric analysis are shown in Table 1.

Comparative example 2

100.00 g (1.00 mol) of methyl methacrylate and 8.20 g (0.05 mol) of azobisisobutyronitrile were dissolved in 600 mℓ of methyl ethyl ketone and the resulting monomer solution was dripped into 100 mℓ of methyl ethyl ketone in $N_2$ atmosphere in 4 hours under reflux and stirring and thereafter stirring was continued for 2 hours under reflux, then methyl ethyl ketone solution (100mℓ) of 3.30 g (0.02 mol) of azobisisobutylonitrile was added, then followed by stirring for 2 hours under reflux. After allowing to cool off and filtration, the filtrate was distilled off under reduced pressure, the resulting reaction mixture was dissolved in 500mℓ of acetone, the solution was gradually dripped into 5,000mℓ of methanol, the methanol layer was removed by decantation and the remainder was washed with 500 mℓ of methanol several times. The polymer thus obtained was recovered by dissolving in acetone, acetone was then distilled off under reduced pressure and 83.95 g of white powder was obtained.

The numeral mean molecular weight calculated from GPC of polyvinyl-type polymer and the 5% weight loss temperature determined by thermogravimetric analysis are shown in Table 1.

Table 1

| Numeral mean | Example 1 | Example 2 | Examle 3 | Comp. Ex. 1 | Comp. Ex. 2 |
|---|---|---|---|---|---|
| mol.weight | 67,000 | 84,400 | 14,300 | 41,200 | 56,800 |
| Expoxy equ. | 2,320 | 741 | 708 | - | - |
| 5% wt.loss temp.(°C) | 342 | 354 | 303 | 314 | 285 |

Example 4, Comparative example 3

100 parts of ethylene-vinyl acetate copolymer (Mitsui DuPont Chemical Co., Ltd.: EVAFLEX 260) with its melt flow rate of 6 g/10 min measured by the method of ASTM D-1238 mixed with 7 parts of N- {4-(2,3-epoxypropoxy)-3,5-dimethylphenylmethyl} acrylamide and 0.1 part of α ,α' -bis(t-butylperoxy-m-isopropyl) benzene (Nippon Oil & Fats Co., Ltd.: Perbutyl-P) at the normal temperature was supplied to a biaxial extruder (Ikegai Corp.: PCM-30) set at 220°C at a rate of 4 kg/hour. The extruded reaction product was cooled with water and after pelletization was dried under reduced pressure for 3 hours at 80°C.

The dried pellets thus obtained were dissolved in xylene preheated to 120°C and the xylene solution was dripped into acetone for reprecipitation of a modified resin to thereby eliminate unreacted modifier and the modifier's homopolymer. The modifier's graft percentage determined from the elemental analysis of the nitrogen atoms contained the modified resin after reprecipitation and from the analytic value of epoxy group by FT-IR method was 4.6%, and the graft reaction ratio was 70%.

This modified polyvinyl type polymer had one structural unit derive from the structural formula ( IV) per 156.8 repeating units of ethylene vinyl acetate copolymer.

With the polyvinyl-type polymer obtained in the aforementioned way, evaluation was made of its adhesiveness.

For comparison, the same evaluation was made of unmodified polyvinyl type polymer (ethylene-vinyl acetate: Mitsui-DuPont Chemical : Co., Ltd. EVAFLEX 260). Sample preparing method:

The dry pellets prepared in Example 4 were frozen at the temperature of liquid nitrogen and smashed. The resulting powder was spread uniformly between two metal plates (aluminum plates 0.2 mm thick, 25 mm wide and 100 mm long) and pressed at 200 °C and 20 kg/$cm^2$ for 2 minutes on an oil hydraulic compression molding machine to make samples.

For comparison, samples of unmodified polyvinyl polymer were made in the same manner.

Measuring method:

T-peeling strength was measured in the following way by the peeling strength test method (JIS K 6854) (n = 5).

One end of the bonded part of a test piece was peeled approximately 10 mm and with both separated ends attached to the chucks of the tester (Shimadzu Seisakusho : Autograph Model AG-B) the chucked ends of the test piece were pulled apart at a speed of 200 mm/min. and at a predetermined temperature.

T-peeling strength test is a method for observing the adhesion strength between the sample and the substrate, the adhesion strength being higher with increasing test value. The measured values are shown in Table 2.

Table 2

| | Copolymer | T-peeling strength 23 °C (Kgf/25mm) |
|---|---|---|
| Comp.ex. 3 | Ethylene-vinyl acetate copolymer (EVAFRLEX 260) | 0.2 |
| Example 4 | polyvinyl type polymer | 6.2 |

Comparative example 4

With glycidyl methacrylate-styrene-methyl methacrylate terpolymers in composition ratios given in Table 3 (Arakawa Kagaku: GMA 5), the numeral mean molecular weight was determined from GPC and the 5% weight loss temperature was measured by thermogravimetric analysis. The results are shown in Table 3.

Comparative examples 5

With glycidyl methacrylate-styrene-methyl methacrylate terpolymers in composition ratios given in Table 3 (Arakawa Kagaku: GMA 6), the numeral mean molecular weight was determined from GPC and the 5% weight loss temperature was measured by thermogravimetric analysis. The results are shown in Table 3.

Table 3

| | Composition GMA/St/MMA | Numeral mean mol.weight | 5% weight loss temperature (°C) |
|---|---|---|---|
| Comp.ex. 4 | 5/93/2 | 39000 | 311 |
| Comp.ex. 5 | 10/33/2 | 42000 | 315 |

Possibility of Industrial Utilization

Polyvinyl type polymers of the present invention can have improved dyeability, paintability, adhesive property and electrostatic behavior according to the kind of polar group incorporated such as amide group and glycidyl group. Especially, glycidyl group is effective for marked improvement of their mechanical strength and heat resistance, and with polystyrene or the like, in particular, its thermal decomposition temperature can be improved remarkably.

With these features the polyvinyl type polymers of the present invention are widely applicable as molding materials of various kinds including, for example, fibers, films and foamed articles.

**Claims**

**1.** A polyvinyl type polymer having one structural unit of glycidyl group represented by the following general formula (I) per 2-1,000 repeating units of vinyl:

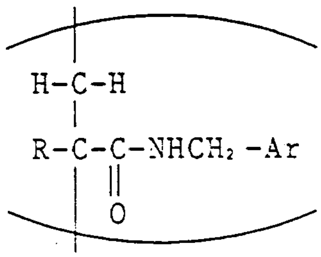

(I)

(In the formula, Ar represents an aromatic hydrocarbon group 6-23 in carbon number having at least one glycidyloxy group, and R represents hydrogen atom or methyl group.).

**2.** The polyvinyl type polymer according to claim 1, wherein said structural unit having the glycidyl group is represented by the following formula (II):

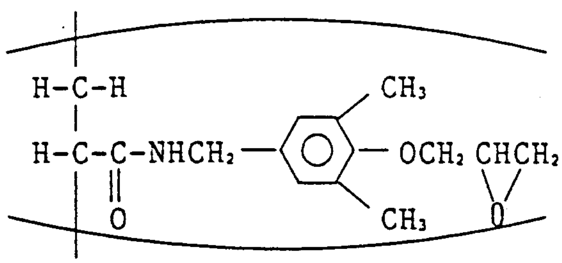

(II)

**3.** A method for manufacturing a polyvinyl type polymer which comprises subjecting two components, a vinyl monomer (A) and a compound (B) having glycidyl group represented by the following general formula (III):

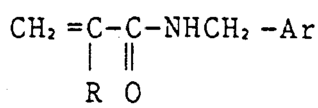

(III)

[In the formula, Ar and R are the same as in the general formula (I)], to copolymerization by the use of a radical polymerization initiator (C).

**4.** A method for manufacturing a polyvinyl type polymer which comprises subjecting a monomeric mixture or a copolymer of a vinyl monomer (A) and an olefin monomer (D), and a compound (B) having glycidyl group represented by the following general formula (III):

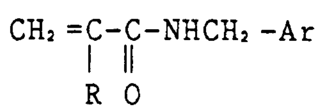

(III)

[In the formula, Ar and R are the same as in the general formula (I)], to copolymerization or graft addition by the use of a radical polymerization initiator (C).

# INTERNATIONAL SEARCH REPORT

International Application No PCT/JP91/01642

**I. CLASSIFICATION OF SUBJECT MATTER** (if several classification symbols apply, indicate all)[6]

According to International Patent Classification (IPC) or to both National Classification and IPC

Int. $Cl^5$ C08F246/00, 220/58, 212/08, 220/10, 220/42, 216/12

**II. FIELDS SEARCHED**

Minimum Documentation Searched[7]

| Classification System | Classification Symbols |
|---|---|
| IPC | C08F246/00, 212/00-212/36, 216/00-216/38, 220/00-220/70 |

Documentation Searched other than Minimum Documentation to the Extent that such Documents are Included in the Fields Searched[8]

| | |
|---|---|
| Jitsuyo Shinan Koho | 1926 - 1991 |
| Kokai Jitsuyo Shinan Koho | 1971 - 1991 |

**III. DOCUMENTS CONSIDERED TO BE RELEVANT**[9]

| Category* | Citation of Document,[11] with indication, where appropriate, of the relevant passages[12] | Relevant to Claim No.[13] |
|---|---|---|
| X | JP, A, 63-37109 (Kanegafuchi Chemical Industry Co., Ltd.), February 17, 1988 (17. 02. 88), Claim (Family: none) | 1-4 |

* Special categories of cited documents:[10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| December 11, 1991 (11. 12. 91) | January 14, 1992 (14. 01. 92) |
| **International Searching Authority** | **Signature of Authorized Officer** |
| Japanese Patent Office | |